# DEMANDE DE BREVET EUROPEEN

(11) **EP 2 179 640 A1**
(43) Date de publication de la demande: **28.04.2010**
(21) Numéro de dépôt: 09305983.0
(22) Date de dépôt: 15.10.2009
(51) Int. Cl.: A01D 75/18, A01D 34/86

(54) **Machine pour la coupe de végétaux**

(30) Priorité: 23.10.2008 FR 0857186
(71) Demandeur: Noremat, 54710 Ludres (FR)
(72) Inventeur: Bachmann, Jacques, 54550, MAIZIERES (FR)
(74) Mandataire: Laget, Jean-Loup

(57) **Abrégé**

Une machine pour la coupe de végétaux comporte un bâti (10) destiné à être attelé à un véhicule porteur, et un bras (11) portant un groupe de travail.

Ledit bras (11) est monté pivotant au moins autour d'un axe vertical (12) afin d'amener le groupe de travail en position de travail.

Ledit bras (11) est porté par des moyens (14, 16) assurant son déplacement en translation le long de l'axe vertical (12) au cours de sa rotation autour dudit axe vertical (12).

## Description

La présente invention concerne d'une manière générale les machines mises en oeuvre pour effectuer des travaux de coupe de végétaux tels que fauchage et/ou débroussaillage de la végétation au sol ou taille de la végétation en hauteur.

Ces machines sont usuellement attelées à un véhicule porteur et comportent un bâti sur lequel est articulé un bras porteur permettant de positionner le groupe de travail sur le côté et à distance du véhicule lors des travaux.

L'un des problèmes de ces machines est la rencontre d'obstacles au cours du travail, tels que pierres ou souches, contre lesquels butte le groupe de travail ce qui peut entraîner la casse de certains éléments.

De manière connue en soi, des moyens sont usuellement prévus pour rabattre le bras porteur vers l'arrière du véhicule et écarter le groupe de travail de l'obstacle.

De tels moyens agissent à l'encontre d'un moyen de rappel qui assure, au cours du travail, le maintien du groupe de travail en position à l'encontre des forces tendant à le rabattre vers l'arrière du fait de son poids et de la résistance à l'avancement qu'il subit.

De tels moyens de rappel peuvent être mécaniques ou hydrauliques.

Lorsque le moyen de rappel est mécanique, c'est-à-dire constitué par un ressort, il en résulte d'une part que l'effacement vers l'arrière ne peut avoir qu'une amplitude limitée et d'autre part que le retour en position du bras est réalisée de manière brutale par l'action du ressort de rappel.

L'opérateur doit soulever le groupe de travail tandis que le véhicule poursuit son déplacement, avant que le bras soit ramené en position de travail par le ressort de rappel.

Cette manoeuvre est convenablement exécutée lorsque le conducteur du véhicule est un professionnel, par exemple une personne affectée au nettoyage des bords de routes, mais un utilisateur occasionnel a moins de dextérité et peut faire de fausses manoeuvres entraînant des détériorations de la machine.

Les machines mettant en oeuvre un moyen de rappel hydraulique sont des machines beaucoup plus sophistiquées et coûteuses. Ces machines sont complexes à conduire et, appartiennent usuellement à des sociétés spécialisées dans la coupe de végétaux telles que celles assurant le nettoyage des bords de route ou autoroute. Les conducteurs de ces machines sont des professionnels qui les utilisent quasi journellement.

L'invention tend à proposer un moyen d'effacement ne nécessitant pas d'action de la part du conducteur et réduisant les risques de détériorations de la machine lors de la présence d'obstacles, adaptable aux machines peu sophistiquées destinées à être mises en oeuvre occasionnellement par des conducteurs non spécialisés et sur lesquelles la position de travail du bras, transversalement par rapport au sens d'avancement, est prédéterminée et non modifiable par le conducteur.

A cet effet, l'invention concerne une machine pour la coupe de végétaux comportant un bâti destiné à être attelé à un véhicule porteur, et un bras portant un groupe de travail, ledit bras pouvant pivoter au moins autour d'un axe vertical afin d'amener le groupe de travail en position de travail, **caractérisée en ce que** ledit bras est porté par des moyens assurant son déplacement en translation le long de l'axe vertical au cours de sa rotation autour dudit axe vertical.

Par cette disposition, le conducteur n'a pas à intervenir sur la machine lorsque le groupe de travail rencontre un obstacle : celui-ci est repoussé vers l'arrière et le bras est entraîné en rotation et en translation par rapport à l'axe vertical de pivotement.

La mise en oeuvre des moyens selon l'invention assurant une élévation de l'ensemble constitué par le bras et le groupe de travail qu'il porte, rend possible un retour automatique du bras dans sa position transversale de travail par l'action de son poids. Ce retour s'effectue ainsi moins brutalement que lors de la mise en oeuvre de moyens élastiques, ce qui réduit les risques de casse de la machine.

De plus, l'élévation de l'ensemble bras / groupe de travail permet de soulever ledit groupe de travail et ainsi de lui permettre de passer au-dessus des obstacles présents dans la zone de travail ce qui évite toute détérioration des outils.

La machine selon l'invention est encore remarquable en ce que :
- le bras est porté par un pivot d'orientation monté mobile en rotation sur ledit axe vertical porté par un support de pivot,
- le pivot d'orientation comporte une partie cylindrique montée mobile autour de l'axe vertical,
- le support de pivot a globalement la forme d'un U, avec le fond du U positionné verticalement et les petites branches inférieure et supérieure, portant l'axe vertical, positionnées horizontalement,
- le bras est monté mobile en rotation autour d'un axe horizontal porté par un embout radial du pivot d'orientation,
- la face supérieure de la petite branche inférieure du support de pivot constitue une surface de guidage du pivot d'orientation, ladite surface de guidage se rapprochant de la petite branche supérieure du support à mesure qu'elle se rapproche du fond vertical dudit support, de sorte que lorsque ledit pivot d'orientation est entraîné en rotation dans le sens tendant à ramener le bras vers l'arrière de la machine, celui-ci soit déplacé verticalement vers le haut le long de l'axe vertical,
- le pivot d'orientation est en appui sur la surface de guidage par au moins une portion de la face inférieure de sa partie cylindrique,
- le pivot d'orientation est en appui sur la surface de guidage par au moins une portion de son embout radial,
- la surface de guidage du pivot d'orientation est de forme hélicoïdale,
- un moyen élastique pousse le pivot dans la direction tendant à l'éloigner de la petite branche supérieure du support de pivot.

L'invention sera mieux comprise grâce à la description qui va suivre donnée à titre d'exemple non limitatif en référence aux dessins annexés dans lesquels :
- la figure 1 est une vue partielle de l'arrière d'un véhicule portant une machine selon l'invention, avec le bras en position de travail,
- la figure 2 est une vue partielle à plus grande échelle des moyens d'effacement selon un premier mode de réalisation de l'invention, dans leur position de repos,
- la figure 3 est une vue partielle de l'arrière d'un véhicule portant une machine selon l'invention, avec le bras en position effacée,
- la figure 4 est une vue partielle à plus grande échelle des moyens d'effacement selon le premier mode de réalisation de l'invention, au cours d'une action d'effacement du bras,
- la figure 5 est une vue partielle à grande échelle des moyens d'effacement selon un second mode de réalisation de l'invention, dans leur position de repos,
- la figure 6 est une vue partielle à plus grande échelle des moyens d'effacement selon le second mode de réalisation de l'invention, au cours d'une action d'effacement du bras,
- la figure 7 est une vue semblable à la figure 5 représentant une variante de réalisation.

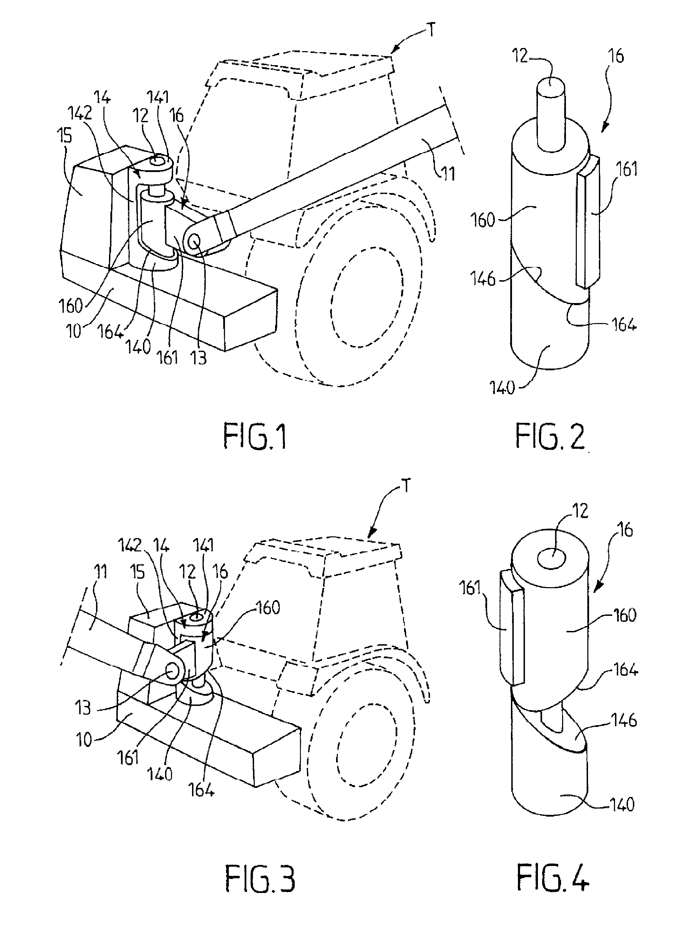

De manière connue en soi et comme visible à la figure 1, une machine pour la coupe de végétaux comporte un bâti 10 destiné à être attelé à un véhicule porteur, par exemple à l'attelage trois points d'un tracteur T, et un bras 11 portant un groupe de travail non représenté sur le dessin. Ledit bâti 10 porte usuellement un contrepoids 15 destiné à éviter un basculement du véhicule porteur au cours du travail.

Le bras 11 est articulé de manière à pouvoir pivoter autour d'un axe vertical 12 et autour d'un axe horizontal 13 afin de positionner convenablement le groupe de travail sur le côté du tracteur T, que ce soit sur le sol pour la coupe de l'herbe ou en hauteur pour la taille de haies.

Suivant l'invention, le bras 11 est monté mobile par rapport à l'axe vertical 12 par des moyens assurant son déplacement en translation le long dudit axe au cours d'un déplacement en rotation autour dudit axe vertical 12.

Le bras 11 est monté pivotant autour de l'axe horizontal 13 sur un pivot d'orientation 16 monté lui-même mobile par rapport à l'axe vertical 12 porté par un support de pivot 14.

Le pivot d'orientation 16 est composé d'une partie cylindrique 160 montée mobile autour de l'axe vertical 12 et d'un embout radial 161 portant l'axe horizontal 13, constitué dans l'exemple de réalisation représenté au dessin par la plaque 161.

Dans l'exemple de réalisation représenté au dessin, le support de pivot 14 a globalement la forme d'un U avec ses petites branches inférieure 140 et supérieure 141 positionnées horizontalement et le fond 142 du U positionné verticalement. La petite branche inférieure 140 repose sur le bâti 10 de la machine, ou, suivant une variante non représentée, est constituée par la portion du bâti 10 disposée au droit de la petite branche supérieure.

L'axe vertical 12 est porté par lesdites petites branches 140, 141 du U constitué par ledit support de pivot 14.

La face supérieure 146 de la petite branche inférieure 140 est inclinée de manière à se rapprocher de la petite branche supérieure 141 en se rapprochant du fond vertical 142 du U.

Ladite face supérieure 146 constitue une surface de guidage du pivot d'orientation 16 du bras 11.

Le pivot d'orientation 16 du bras 11 est en appui sur ladite face supérieure 146 de la petite branche inférieure 140 de sorte que lorsque ledit pivot d'orientation 16 est entraîné en rotation dans le sens tendant à ramener le bras 11 vers l'arrière de la machine, et donc du véhicule tracteur, celui-ci se déplace verticalement vers le haut le long de l'axe vertical 12.

Dans l'exemple de réalisation représenté aux figures 1 à 4, le pivot d'orientation 16 est en appui sur la surface de guidage 146 par la face inférieure 164 de sa partie cylindrique 160.

La face inférieure 164 de ladite partie cylindrique 160 et la surface de guidage 146 sont par exemple constituées par deux plans obliques de même inclinaison ou par des surfaces hélicoïdales complémentaires.

Suivant une variante de réalisation non représentée au dessin, seule une portion de la face inférieure 164 de la partie cylindrique 160 est en appui sur la surface de guidage 146.

Pour un véhicule circulant sur la voie de droite de la route pour travailler sur le bas côté droit tel que celui représenté au dessin, cette rotation s'effectue dans le sens horaire. Pour un véhicule circulant sur la voie de gauche de la route pour travailler sur le bas côté gauche, cette rotation s'effectue dans le sens anti-horaire.

Les faces 146 et 164 en appui l'une sur l'autre du support de pivot 14 et du pivot d'orientation 16 entraînent ledit pivot 16 vers le haut, le long de l'axe vertical 12, au cours de sa rotation autour dudit axe vertical 12 dans le sens tendant à ramener le bras 11 vers l'arrière.

Grâce au montage selon l'invention, lorsque le bloc de travail rencontre un obstacle, le bras 11 est déplacé vers le haut au cours de son entraînement vers l'arrière de sorte que ledit bloc de travail est soulevé et peut être déplacé au-dessus de l'obstacle.

C'est l'effort exercé par le poids du bras 11 portant le bloc de travail qui ramène le bloc de travail vers l'avant et en appui sur le sol par la rotation en sens inverse du pivot 16 autour de l'axe vertical 12, celui-ci glissant par sa face inférieure 164 sur la surface de guidage 146 du support de pivot 14.

Le retour en position de travail dudit bloc de travail s'effectue ainsi beaucoup moins brutalement qu'avec les montages connus dans lesquels le bras est soumis à un ressort de rappel, ce qui réduit les risques de casse du matériel.

De manière avantageuse, le dispositif selon l'invention permet de plus la rotation du bras 11 sur une plus grande amplitude de sorte que l'évitement des obstacles est réalisé dans de meilleures conditions.

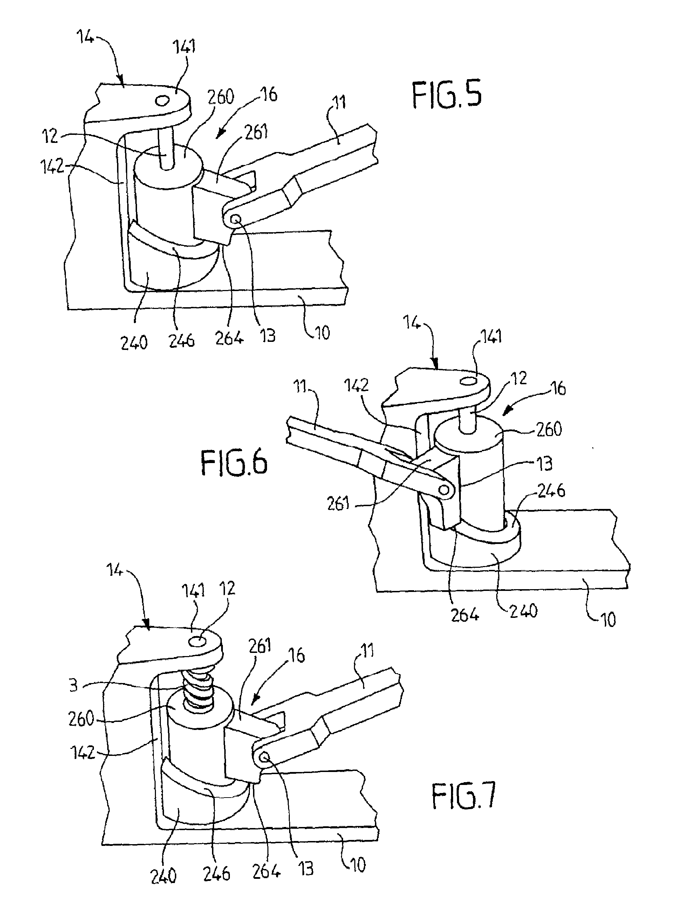

Sur les figures 5 à 7, le pivot d'orientation 16 portant le bras 11 est constitué d'une partie cylindrique 260 et d'un embout radial 261 portant l'axe horizontal 13.

Dans ce second mode de réalisation de l'invention, la petite branche inférieure 240 porte un anneau de guidage dont la face supérieure inclinée forme la surface de guidage 246 du pivot d'orientation 16.

Le pivot d'orientation 16 est en appui sur ladite surface de guidage 246 par la face inférieure 264 de l'embout radial 261 et la partie cylindrique 260 est positionnée à l'intérieur dudit anneau de guidage.

La surface de guidage 246 de ladite petite branche inférieure 240 se rapproche de la petite branche supérieure 141 du support 14 à mesure qu'elle se rapproche du fond vertical 142 dudit support 14 et est par exemple de forme hélicoïdale.

Par cette disposition, ledit embout radial 261 glisse sur la surface de guidage 246 et le bras est déplacé vers le haut le long de l'axe vertical 12 lors de sa rotation dans le sens tendant à le ramener vers l'arrière.

Ce mode de réalisation présente l'avantage de fournir une surface d'appui de dimension constante entre le pivot d'orientation 16 et la surface de guidage 246 de la petite branche inférieure du support de pivot 14 quelle que soit la position angulaire du bras par rapport audit axe vertical 12.

Suivant la variante de réalisation représentée à la figure 7, un moyen élastique 3 représenté sous la forme d'un ressort hélicoïdal assure une poussée sur le pivot d'orientation 16 dans la direction tendant à l'éloigner de la petite branche supérieure 141 du support de pivot 14.

Ce moyen élastique 3 favorise le retour du pivot d'orientation 16, et du bras 11 qu'il porte, vers la position normale de travail pour laquelle ledit bras 11 est sur le côté de la machine.

## Revendications

1. Machine pour la coupe de végétaux comportant un bâti (10) destiné à être attelé à un véhicule porteur, et un bras (11) portant un groupe de travail, ledit bras (11) pouvant pivoter au moins autour d'un axe vertical (12) afin d'amener le groupe de travail en position de travail, **caractérisée en ce que** ledit bras (11) est porté par des moyens (14, 16) assurant son déplacement en translation le long de l'axe vertical (12) au cours de sa rotation autour dudit axe vertical (12).

2. Machine selon la revendication 1, **caractérisée en ce que** le bras (11) est porté par un pivot d'orientation (16) monté mobile en rotation sur ledit axe vertical (12) porté par un support de pivot (14).

3. Machine selon la revendication 2, **caractérisée en ce que** le pivot d'orientation (16) comporte une partie cylindrique (160, 260) montée mobile autour de l'axe vertical (12).

4. Machine selon la revendication 2 ou selon la revendication 3, **caractérisée en ce que** le support de pivot (14) a globalement la forme d'un U avec le fond (142) du U positionné verticalement et les petites branches inférieure (140, 240) et supérieure (141), portant l'axe vertical (12), positionnées horizontalement.

5. Machine selon l'une quelconque des revendications précédentes, **caractérisée en ce que** le bras (11) est monté mobile en rotation autour d'un axe horizontal (13) porté par un embout radial (161, 261) du pivot d'orientation (16).

6. Machine selon l'une quelconque des revendications précédentes, **caractérisée en ce que** la face supérieure de la petite branche inférieure (140, 240) du support de pivot (14) constitue une surface de guidage (146, 246) du pivot d'orientation (16), ladite surface de guidage (146, 246) se rapprochant de la petite branche supérieure (141) du support (14) à mesure qu'elle se rapproche du fond vertical (142) dudit support (14), de sorte que lorsque ledit pivot d'orientation (16) est entraîné en rotation dans le sens tendant à ramener le bras (11) vers l'arrière de la machine, celui-ci soit déplacé verticalement vers le haut le long de l'axe vertical (12).

7. Machine selon la revendication 6, **caractérisée en ce que** le pivot d'orientation (16) est en appui sur la surface de guidage (146) par au moins une portion de la face inférieure (164) de sa partie cylindrique (160).

8. Machine selon la revendication 6, **caractérisée en ce que** le pivot d'orientation (16) est en appui sur la surface de guidage (246) par au moins une portion de son embout radial (261).

9. Machine selon l'une quelconque des revendications 6 à 8, **caractérisée en ce que** la surface de guidage (146, 246) du pivot d'orientation (16) est de forme hélicoïdale.

10. Machine selon l'une quelconque des revendications 4 à 9, **caractérisée en ce que** un moyen élastique (3) pousse le pivot d'orientation (16) dans la direction tendant à l'éloigner de la petite branche supérieure (141) du support de pivot (14).
